# EUROPEAN PATENT SPECIFICATION

(11) **EP 3 597 411 B1**
(45) Date of publication and mention of the grant of the patent: **02.03.2022**
(21) Application number: 18766961.9
(22) Date of filing: 02.03.2018
(51) Int. Cl.: B29C 70/38, B29C 64/147, B29C 64/205, B33Y 10/00, B33Y 30/00

(54) **FIBER BUNDLE ADHERING DEVICE**
FASERBÜNDELHAFTVORRICHTUNG
DISPOSITIF DE COLLAGE POUR FAISCEAU DE FIBRES

(30) Priority: 13.03.2017 JP 2017047006
(43) Date of publication of application: 22.01.2020
(73) Proprietor: Toray Engineering Co., Ltd., Tokyo 103-0028 (JP)
(72) Inventor: INAGAKI, Jun, Otsu-shi Shiga 520-0842 (JP); AOKI, Shimpei, Otsu-shi Shiga 520-0842 (JP); TAKEGAMI, Toshifumi, Otsu-shi Shiga 520-0842 (JP); SUGAMORI, Masato, Aichi 455-0024 (JP); HATTORI, Kimihiko, Aichi 455-0024 (JP); MATSUOKA, Hideo, Aichi 455-0024 (JP)
(74) Representative: Global IP Europe Patentanwaltskanzlei
(86) International application number: PCT/JP2018/007926
(87) International publication number: WO 2018/168511

(56) References cited:
- WO-A1-2008/110614
- WO-A2-2016/062787
- JP-A- H05 246 000
- JP-A- 2002 506 754

## Description

### [TECHNICAL FIELD]

The present invention relates to a device and a technique for manufacturing fiber-reinforced plastic (FRP) products by affixing a fiber bundle that has been impregnated with a resin in advance to an affixing surface.

### [BACKGROUND ART]

There are known methods for manufacturing FRP (fiber-reinforced plastic) products by forming a fiber bundle of carbon fibers or the like that have been impregnated in advance with a resin, in a tape shape and affixing this to an affixing surface. These methods are usually known as AFP (auto fiber placement), in which relatively narrow fiber bundles are affixed or simply arranged, ATL (auto tape layup), in which relatively wide fiber bundles are affixed or simply arranged, and so forth, but these two are not strictly distinguished from each other. In the present invention, regardless of the width of the fiber bundle to be affixed, a manufacturing method in which fiber bundles and/or the affixing surface is at least heated by a heating means and the fiber bundles are successively affixed to the affixing surface shall be referred to collectively as ATL, and the device used for this (fiber bundle affixing device) as an ATL device.

In the operation of affixing fiber bundles to the affixing surface in an ATL device, the usual practice is to make use of an ATL head (affixing head) that affixes at least temporarily hold at least a part of the fiber bundle, moves relative to the affixing surface along the affixation path of the fiber bundle while affixing the fiber bundles under heating and/or pressure.

The heating means here is very often a non-contact heating means such as a laser or an infrared lamp. For the pressing means, it is common to use a pressing member such as a roller or a shoe that sandwiches the fiber bundle between itself and the affixing surface while pressing the fiber bundle in the normal direction of the affixing surface.

The affixing surface is preferably a free-form surface, and therefore the operation of the ATL head often needs to have a three-dimensional freedom (translation and rotation). Therefore, the ATL head is often attached to an articulated robot, or to a so-called gantry structure that combines orthogonal and rotational movement systems.

In a typical situation, the fiber bundle to be affixed is usually supplied in a form that is wound on a bobbin, and in the ATL device, a mechanism for unwinding the fiber bundles from the bobbin (referred to as a creel) is essential.

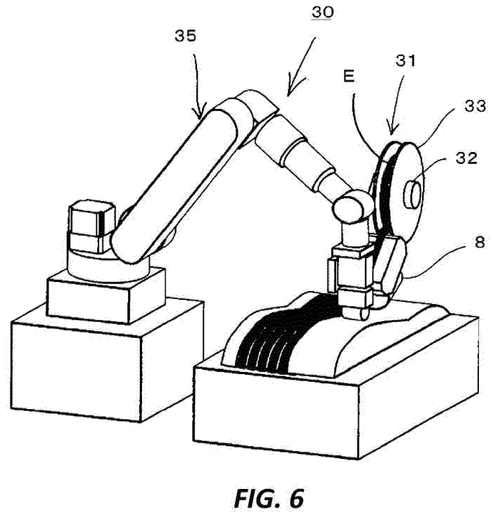

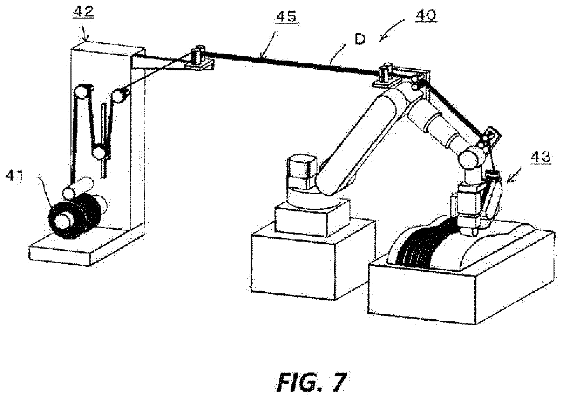

Depending on the location of this unwinding mechanism, ATL devices can be classified into two main types. In one, the unwinding mechanism is mounted on the ATL head itself (this will hereinafter be referred to as a mounted type, an example of which is shown in FIG. 6). In the other, the fiber bundles are played out from a fixed (stationary) unwinding mechanism and fed to the ATL head along the conveyance path (known as a yarn path) (hereinafter referred to as a stationary type, an example of which is shown in FIG. 7).

Whether a mounted type or a stationary type is used, the usual practice is such that after a predetermined length of the continuous fiber bundle unwound from the bobbin has been affixed to the affixing surface, the fiber bundle is cut near the affixed rear end to complete the affixing operation. Therefore, there is normally a fiber bundle cutting means in the ATL head.

WO 2008/110614 A1 discloses a fiber bundle affixing device having an affixing head that affixes fiber bundles that have been cut in advance to a predetermined length, one by one to an affixing surface under heating and/or pressure, wherein the affixing head has at least a heating means for heating the fiber bundles and/or the affixing surface, and a holding and conveyance means for holding and conveying just one fiber bundle.

### [PRIOR ART DOCUMENT]

### [PATENT LITERATURE]

[Patent Literature 1] Japanese Translation of PCT International Application Publication No. 2014-511781

### [SUMMARY OF THE INVENTION]

### [PROBLEMS TO BE SOLVED BY THE INVENTION]

With a mounted type of ATL device 30, the ATL head 31 itself comprises an unwinding mechanism 32, and a bobbin 33 is located inside the ATL head 31, an advantage of which is that there is no need for a complex conveyance system (yarn path 45), in contrast to a stationary type of ATL device 40 (see FIGS. 6 and 7).

As discussed above, an ATL head undergoes translational movement on the affixing surface in all directions according to the affixing operation, and itself swings (rotates or revolves) according to the normal direction of the affixing surface. Therefore, it is necessary to supply the fiber bundle D from the stationary unwinding mechanism 42 (creel) to the ATL head 43 that moves and rotates in all directions. Furthermore, since the fiber bundle D is in the form of a tape, there is a limit to how far the fiber bundle D can be twisted along the yarn path 45, so a problem is that the fiber bundle D must be supplied to the ATL head 43 while still in the form of a tape, without being twisted more than one rotation, and this makes the yarn path 45 longer and more complicated.

In addition, so-called fuzz from the fiber bundle D and the impregnating resin that falls off can lead to fouling of the conveying member of the yarn path 45 and clogging of the yarn path 45, which often causes problems because of long yarn path 45.

In particular, when the fiber bundle D is impregnated with a thermosetting resin (this is often called a prepreg tape), the prepreg tape itself has a sticky, tacky surface, and it is preferable to minimize contact with the conveying member, sliding, and so forth as much as possible, so a problem is that the structure of the yarn path 45 and the conveying member becomes more complicated.

On the other hand, few of the problems with the above-mentioned stationary type are encountered with a mounted type, but there are other problems inherent in a mounted type.

The most serious of these is that since the ATL head 31 itself carries the unwinding mechanism 32, it often ends up being large and heavy. Therefore, the articulated robot 35 or gantry on which the ATL head 31 is mounted also need to be large and highly rigid, and this drives up the overall cost of the ATL device 30. Also, there is a limit to the fiber bundle (bobbin 33) that can be mounted on the ATL head 31, and thread replacement (bobbin replacement) and so forth tend to be needed more frequently than with a stationary type. This leads to a problem in that the operating rate of the ATL device is decreased as a production device.

Yet another problem is the effect that heat from the heating source has on the fiber bundle. The ATL head 31 is equipped with a heating means for the fiber bundle and/or the affixing surface. A radiant heat source such as an infrared lamp 8, a forced air heater, or the like is often used as the heating means. These devices themselves also usually generate considerable heat during their operation.

A laser is also sometimes used as a heat source, in which case the laser oscillating tube itself is usually provided on the outside of the ATL head 31, and the laser light is guided by an optical fiber or the like to the ATL head 31. For this reason, although less heat is generated inside the ATL head 31 than with a radiant heat source or forced air heater, heat is still generated by the lenses, reflectors, and other such optical members.

In addition, whatever heating source is used, the heat from the heating source will gradually build up in the ATL head 31 as the affixing operation proceeds, that is, in the course of the heating operation of the heating source, and this can result in a phenomenon whereby the ATL head 31 itself is heated and rises in temperature.

As a result, there arises a problem in that the fiber bundle E that is mounted on the ATL head 31 but has not yet been affixed is affected by this heat. When the fiber bundle E is a thermosetting prepreg tape, the adhesiveness and tackiness of the prepreg tape itself may be further promoted by temperature. This causes a problem in that slidability along the conveyance path decreases from the unwinding mechanism 32 up until the affixing, which raises the conveyance resistance, and if this becomes very pronounced, the fiber bundle may adhere to the conveyance path and cause a conveyance failure. In an even more serious case, unwinding from the unwinding mechanism 32 may not proceed properly, and the heating is excessive, some of the impregnating resin, which is thermosetting, will start curing, and this can alter and degrade the characteristics of the prepreg tape.

In addition, fouling of the surface of the conveyance path due to impregnating resin that has fallen off may also be promoted, among other such problems.

A thermosetting prepreg tape is discussed above, but even in the case of a fiber bundle impregnated with a thermoplastic resin (hereinafter referred to as a UD tape for convenience), problems attributable to temperature may still occur.

In general, a thermoplastic resin that impregnate a UD tape is solid at room temperature, and therefore the surface thereof is not usually sticky or tacky as is a prepreg tape. However, in affixing the UD tape, it is necessary to heat at least the thermoplastic resin impregnating the UD tape to its softening point or close to its melting point.

For example, even polypropylene (hereinafter PP), which has the lowest softening point, requires heating to around 150°C, and with a nylon (a polyamide, hereinafter PA), which is frequently used, the temperature is around 180°C for nylon 6 and around 230°C for nylon 66, and it is said that heating to about 280°C is needed with polyphenylene sulfide (hereinafter referred to as PPS), which is highly heat resistant.

Accordingly, it is often necessary to mount a heating source having a large capacity, and as a result, the heat from the heating source in the ATL head 31 often greatly affects the fiber bundle E.

In light of the problems encountered with the prior art described above, there has been a need for an ATL device with which the size and weight of the ATL head can be kept down, without creating a long fiber bundle conveyance path, and further, the effect that heat from the heating source has on the fiber bundle can be reduced.

### [MEANS TO SOLVE THE PROBLEMS]

To deal with the above problem, the present invention is a fiber bundle affixing device according to claim 1 having an affixing head that affixes fiber bundles that have been cut in advance to a predetermined length, one by one to an affixing surface under heating and/or pressure, wherein the affixing head has at least a heating means for heating the fiber bundles and/or the affixing surface, and a holding and conveyance means for holding and conveying just one fiber bundle, and during the operation of affixing the fiber bundles by the affixing head, only the fiber bundle being affixed by the affixing head is held and conveyed by the holding and conveyance means.

In another aspect of the present invention, there is provided a fiber bundle affixing device wherein the affixing head is attached to an articulated robot or a gantry structure.

In another aspect of the present invention, there is provided a fiber bundle affixing device further comprising a fiber bundle storage means for storing the fiber bundles, and a fiber bundle supply means for supplying the fiber bundles stored in the fiber bundle storage means to the affixing head.

In another aspect of the present invention, there is provided the fiber bundle affixing device according to any one of claims 1 to 3, wherein at least a part of the fiber bundle is impregnated with a resin in advance.

In another aspect of the present invention, there is provided a fiber bundle affixing device wherein the fiber bundle includes carbon fibers, and the resin is a thermoplastic resin.

### [EFFECTS OF THE INVENTION]

With the present invention, when a fiber bundle that has been cut in advance to a predetermined length, that is, the length to be affixed, is affixed under heating and/or pressure with an ATL head, only the fiber bundle that is undergoing the affixing operation is allowed to be present in the ATL head, so the other fiber bundles do not remain near the heating source in the ATL head for an extended period of time, which reduces the influence of the heat from the heating source.

Furthermore, the fiber bundles are cut in advance to a predetermined length and stored in a fiber bundle storage means, and then a fiber bundle supply means supplies the fiber bundles one by one to the ATL head, which makes it possible to avoid the problem of creating a long fiber bundle conveyance path, and the problem of increased size and weight of the ATL head.

### [BRIEF DESCRIPTION OF THE DRAWINGS]

FIG. 1 is a diagram of the overall ATL device according to a first mode of the present invention;
FIG. 2 is a side view of the configuration of the ATL head;
FIG. 3 is a diagram illustrating the procedure for affixing of the ATL device according to the first mode;
FIG. 4 is a diagram illustrating the delivery of a fiber bundle from a fiber bundle supply means to the ATL head;
FIG. 5 is a diagram of the overall ATL device according to a second mode of the present invention;
FIG. 6 is a diagram of an ATL device according to prior art; and
FIG. 7 is a diagram of an ATL device according to prior art.

### [EMBODIMENTS TO CARRY OUT THE INVENTION]

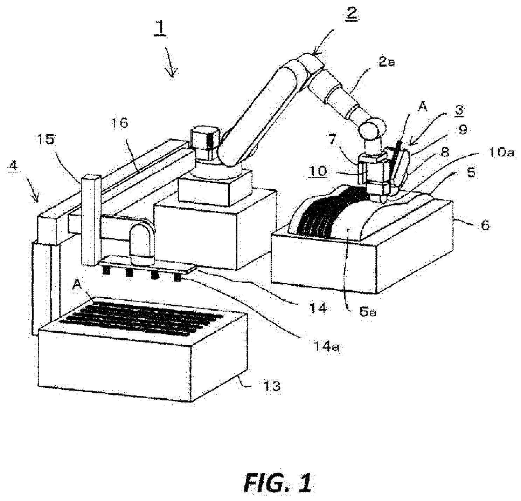

An embodiment of the present invention will now be described with reference to FIG. 1.

FIG. 1 is a diagram of the overall ATL device 1 according to a first mode of the present invention. The ATL device 1 consists of an articulated robot 2, an ATL head 3 that is provided at the distal end of an arm 2a of the articulated robot, a fiber bundle supply means 4 for supplying fiber bundles A that have been cut in advance to the ATL head 3, a placement table 13 that serves as a fiber bundle storage means for storing the fiber bundles A, a workpiece 5 having an affixing surface 5a, a workpiece table 6 on which the workpiece 5 is placed, and so forth.

In this embodiment, the workpiece 5 is the product of injection molding a thermoplastic resin, and the purpose of the affixing is to reinforce the workpiece 5 by affixing cut UD tapes A having the same thermoplastic resin to the surface of the workpiece 5. Naturally, the shape of the workpiece 5, the position where the UD tapes A are affixed, and the affixed length are predetermined.

A commercially available general-purpose industrial articulated robot can be used as the articulated robot 2. The ATL head 3 is attached to the distal end of the arm 2a of the articulated robot.

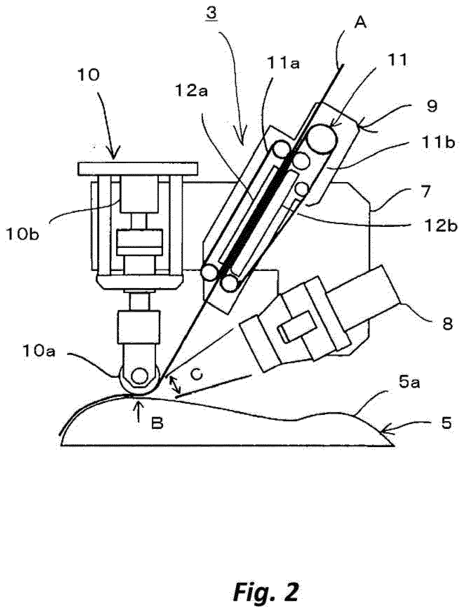

The ATL head 3 has, on a base material 7, at least an infrared lamp 8 that serves as a heating means, a feeder 9 that serves as a fiber bundle holding and conveyance means, and a pressing means 10 that sandwich and squeezes the fiber bundle between itself and the affixing surface 5a of the workpiece 5 while affixing the fiber bundle to the affixing surface 5a (see FIG. 2).

The heating source is not limited to the infrared lamp 8, and any non-contact heating means such as a laser or a force air source can be used. The infrared lamp 8 has an optical system such as a reflector and a lens (not shown), and converges the emitted infrared rays on the upstream side of the affixing point indicated by B in the drawing, and in the region indicated by the double arrow C in the drawing, thereby heating the member surface that is in this region. Consequently, the infrared lamp 8 can heat the heated surface 5a and the affixed surface side of the UD tape A in this region.

Inside the feeder 9 for holding and conveying the UD tape A, there is a pair of conveyor belts 11, and the UD tape A is sandwiched between and conveyed by the conveyor belts 11a and 11b. There are heaters 12a and 12b within the conveyor belts 11a and 11b, allowing the conveyor belt 11a and 11b to be preheated to a specific temperature. Because the UD tape A is conveyed between the preheated conveyor belts 11a and 11b, it can be preheated to a specific temperature before reaching the affixing point B. This preheating is not essential, and may be unnecessary depending on the material, thickness, and so on of the UD tape A and the workpiece 5.

The pressing means 10 has a pressing roller 10a that sandwiches and presses the UD tape A between itself and the affixing surface 5a while affixing the UD tape A to the affixing surface 5a, and an air cylinder 10b that serves as the pressure source for the pressing roller.

The fiber bundle supply means 4 consists of the supply table 13 (corresponds to the fiber bundle storage means) on which the UD tapes A that have been cut in advance to a predetermined length are stacked, a pickup hand 14 that picks up the UD tapes A one by one from the supply table 13, and gantry shafts 15 and 16 that move the pickup hand 14 in the vertical and horizontal directions.

The pickup hand 14 has a plurality of suction chucks 14a. These suction chucks 14a pick up just one of the UD tapes A placed on the supply table 13.

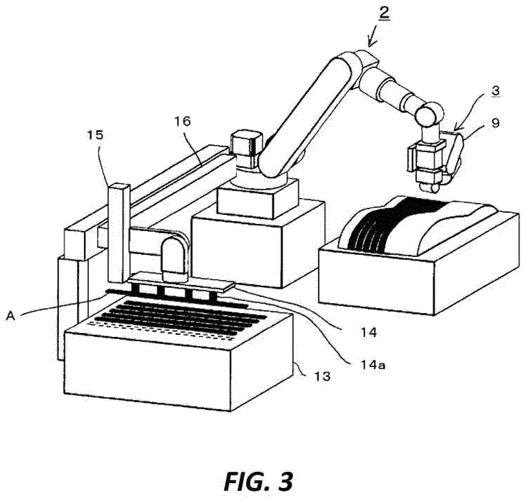

The steps of affixing the UD tapes A with the ATL device 1 will now be described in order with reference to FIG. 3. Any members not directly related to the description of the affixing operation are not numbered in the drawings.

First, as shown in FIG. 3, the gantry shafts 15 and 16 are operated so that the pickup hand 14 picks up just one of the UD tapes A on the supply table 13. As shown in FIG. 3, at this point both ends (at least one end) of the UD tape A protrude in its extension direction from both ends of the pickup hand 14, and in this state the UD tape A is sucked and picked up by the suction chucks 14a.

Next, the pickup hand 14 moves to the delivery position. The UD tape A held by the pickup hand 14 is delivered to the feeder 9 in the ATL head 3 at the delivery position. The delivery position is not particularly limited, as long as it is within the region shared by the area over which the pickup hand 14 can be moved by the gantry shafts 15 and 16, and the area over which the ATL head 3 can be moved by the articulated robot 2.

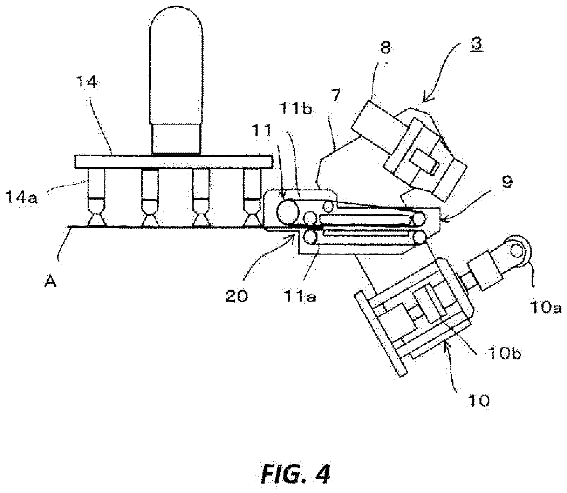

At the delivery position, as shown schematically in FIG. 4, the articulated robot 2 is operated so that one end of the UD tape A held by the pickup hand 14 is slightly inserted into an insertion port 20 of the feeder 9 in the ATL head 3. When one end of the UD tape A has been inserted by a specific length into the feeder 9, the vacuum of the suction chucks 14a is released and the UD tape A is delivered to the ATL head 3. At the same time, the feeder 9 is operated to transport the UD tape A to a predetermined standby position.

The articulated robot 2 is again operated to move the ATL head 3 to the affixing start position. The articulated robot 2 is then operated to press the pressing roller 10a against the affixing surface 5a. At this point, the feeder 9 operates at the timing when the pressing roller 10a comes into contact with the affixing surface 5a, and the UD tape A is conveyed so that just the distal end of the UD tape A is sandwiched between the pressing roller 10a and the affixing surface 5a. At this point, the infrared lamp 8 is also turned on in synchronization with this timing, and the heating of the affixing surface 5a and the affixed surface side of the UD tape A is commenced.

The ATL head 3 successively affixes the UD tapes A to the affixing surface 5a while moving and swinging over the affixing surface 5a of the workpiece 5 along the affixing path of the UD tapes A. During this time (the state shown in FIG. 1), the feeder 9 is operating to convey and supply the UD tapes A toward the affixing point B.

When the UD tape A has been affixed up to its rear end, the infrared lamp 8 is turned off, and the operation of the articulated robot 1 releases the pressing on the pressing roller 10a and the affixing surface 5a, which completes the affixing of one UD tape A.

The same operation is then repeated so that UD tapes A are affixed to the affixing surface 5a.

In this embodiment, a gantry structure is used for the fiber bundle supply means 4, but an articulated robot may be used instead.

In the present invention, a cutting step is required for cutting the fiber bundles into a predetermined length, for which various known cutting devices can be used. Furthermore, no cutting mechanism is not required inside the ATL head 3, which is preferable because the ATL head 3 can be made lighter and simpler.

A step of supplying the cut fiber bundles A to the fiber bundle storage means (the placement table 13) is also necessary, but the bundles may be supplied manually, or various known automatic conveyance devices and mechanisms may be used.

Usually, in an assembly device featuring such a robot or the like, the movable range of the robot is surrounded by a safety fence or the like to ensure the safety of workers. In regard to the present invention, the fiber bundle storage means (placement table 13) may, for example, be disposed outside the safety fence or the like, the safety fence or the like may be provided with an automatically opening and closing door member or the like, and the fiber bundle supply means provided inside the safety fence may pick up the fiber bundles A through this door member. The advantage to this configuration is that when the fiber bundles A are manually supplied to the placement table, there is no need to stop the affixing operation of the ATL device 1.

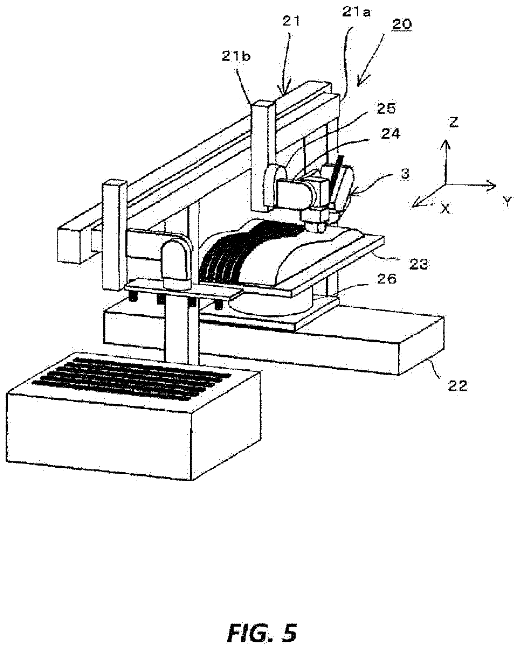

FIG. 5 shows an ATL device 20 according to a second mode related to the present invention. In the ATL 20 device, a gantry structure 21, a linear motion stage 22, and a rotary table 23 are used instead of the articulated robot 2 of the ATL device 1 in the first mode. A workpiece 6 is placed on the rotary table 23. In FIG. 5, those members that are the same as in FIGS. 1 and 2 are not numbered.

With the ATL device 20, in regard to the affixing operation of the ATL head 3, x-axis direction translational motion is handled by a gantry shaft 21b, y-axis direction translational motion by a linear stage 22, and z-axis direction translational motion by a gantry shaft 21n. As for rotational motion, a rotary joint 24 handles motion around the x axis, a rotary joint 25 handles motion around the y axis, and a rotary stage 26 handles motion around the z axis.

Consequently, translational and rotational degrees of freedom are realized on each axis during the affixing operation of the ATL head 3.

The affixing operation with the ATL device 20 is the same as that with the ATL device 1, and will therefore not be described again.

### [DESCRIPTION OF THE REFERENCE NUMERALS]

- 1: ATL device
- 2: articulated robot
- 3: ATL head
- 4: fiber bundle supply means
- 5: workpiece
- 6: workpiece table
- 7: base material
- 8: infrared lamp
- 9: feeder
- 10: pressing member
- 10a: pressing roller
- 11: conveyor belt pair
- 11a, 11b: conveyor belt
- 12a, 12b: heater
- 13: placement table
- 14: pickup hand
- 15, 16: gantry shaft
- 17 20: ATL device
- 21: gantry structure
- 21a, 21b: gantry shaft
- 22: linear motion table
- 23: rotary table
- 24,25: rotary joint
- 26: rotary stage
- 30: ATL device
- 31: ATL head
- 32: unwinding mechanism
- 33: bobbin
- 35: articulated robot
- 40: ATL device

## Claims

1. A fiber bundle affixing device (1) having an affixing head (3) that affixes fiber bundles (A) that have been cut in advance to a predetermined length, one by one to an affixing surface (5a) under heating and/or pressure, wherein the affixing head has at least a heating means (8) for heating the fiber bundles and/or the affixing surface, and a holding and conveyance means (9) for holding and conveying just one fiber bundle, wherein the affixing head is configured to, during the operation of affixing the fiber bundle by the affixing head, hold and convey only the fiber bundle being affixed by the holding and conveyance means.

2. The fiber bundle affixing device (1) according to claim 1, wherein the affixing head (3) is attached to an articulated robot (2) or a gantry structure (21).

3. The fiber bundle affixing device (1) according to claim 1 or 2, further comprising a fiber bundle storage means (13) for storing the fiber bundles (A), and a fiber bundle supply means (4) for supplying the fiber bundles stored in the fiber bundle storage means to the affixing head (3).

4. The fiber bundle affixing device (1) according to any one of claims 1 to 3, wherein at least a part of the fiber bundle is impregnated with a resin in advance.

5. The fiber bundle conveyance device (1) according to any one of claims 4, wherein the fiber bundles (A) include carbon fibers, and the resin is a thermoplastic resin.

## Patentansprüche

1. Faserbündel-Befestigungsvorrichtung (1) mit einem Befestigungskopf (3), der Faserbündel (A), die im Voraus auf eine vorbestimmte Länge geschnitten worden sind, der Reihe nach an einer Befestigungsfläche (5a) unter Erwärmung und/oder Druck befestigt, wobei der Befestigungskopf mindestens ein Heizmittel (8) zum Erwärmen der Faserbündel und/oder der Befestigungsfläche und ein Halte- und Beförderungsmittel (9) zum Halten und Befördern genau eines Faserbündels aufweist,
wobei
der Befestigungskopf konfiguriert ist, während des Vorgangs des Befestigens des Faserbündels durch den Befestigungskopf nur das Faserbündel zu halten und zu befördern, das durch das Halte- und Beförderungsmittel befestigt wird.

2. Faserbündel-Befestigungsvorrichtung (1) nach Anspruch 1, wobei der Befestigungskopf (3) an einem Knickarmroboter (2) oder einer Portalstruktur (21) angebracht ist.

3. Faserbündel-Befestigungsvorrichtung (1) nach Anspruch 1 oder 2, die ferner ein Faserbündel-Speichermittel (13) zum Speichern der Faserbündel (A) und ein Faserbündel-Zufuhrmittel (4) zum Zuführen der im Faserbündel-Speichermittel gespeicherten Faserbündel zum Befestigungskopf (3) aufweist.

4. Faserbündel-Befestigungsvorrichtung (1) nach einem der Ansprüche 1 bis 3, wobei mindestens ein Teil des Faserbündels im Voraus mit einem Harz imprägniert wird.

5. Faserbündel-Beförderungsvorrichtung (1) nach Anspruch 4, wobei die Faserbündel (A) Kohlefasern enthalten und das Harz ein thermoplastisches Harz ist.

## Revendications

1. Dispositif de fixation pour faisceaux de fibres (1) ayant une tête de fixation (3) fixant l'un après l'autre, par chauffage et/ou pression, des faisceaux de fibres (A) préalablement coupés à une longueur définie sur une surface de fixation (5a), ladite tête de fixation comportant au moins une unité de chauffage (8) destinée à chauffer les faisceaux de fibres et/ou la surface de fixation, et une unité de maintien et de transport (9) destinée à ne maintenir et à ne transporter qu'un seul faisceau de fibres,
où
la tête de fixation est prévue pour ne maintenir et ne transporter, pendant l'opération de fixation du faisceau de fibres par la tête de fixation, que le faisceau de fibres en cours de fixation, par l'unité de maintien et de transport.

2. Dispositif de fixation pour faisceaux de fibres (1) selon la revendication 1, où la tête de fixation (3) est raccordée à un robot articulé (2) ou à une structure de portique (21).

3. Dispositif de fixation pour faisceaux de fibres (1) selon la revendication 1 ou la revendication 2, comprenant en outre une unité de stockage de faisceaux de fibres (13) destinée à stocker les faisceaux de fibres (A), et une unité d'alimentation en faisceaux de fibres (4) destinée à alimenter la tête de fixation (3) en faisceaux de fibres stockés dans l'unité de stockage de faisceaux de fibres.

4. Dispositif de fixation pour faisceaux de fibres (1) selon l'une des revendications 1 à 3, où au moins une partie du faisceau de fibres est imprégnée préalablement avec une résine.

5. Dispositif de transport pour faisceaux de fibres (1) selon la revendication 4, où les faisceaux de fibres (A) comprennent des fibres de carbone, et où la résine est une résine thermoplastique.
